# EUROPEAN PATENT APPLICATION

(11) **EP 0 524 688 A2**
(43) Date of publication of application: **27.01.1993**
(21) Application number: 92202171.2
(22) Date of filing: 15.07.1992
(51) Int. Cl.: G11B 15/665, G11B 15/61

(54) **Apparatus suitable for cooperation with a magnetic tape**

(30) Priority: 24.07.1991 EP 91201938
(71) Applicant: Philips Electronics N.V., 5621 BA Eindhoven (NL)
(72) Inventor: Vollmann, Norbert Christian, NL-5656 AA Eindhoven (NL)
(74) Representative: Van Weele, Paul Johannes Frits

(57) **Abstract**

A deck (111) of an apparatus comprises a scanning unit (5), tape guides (19, 21, 101) and tape-transport means (11, 13) and is suitable for cooperation with a magnetic tape (2) on two reels (107, 109) disposed on a reel plane (3). In operation the magnetic tape (2) is wrapped around the scanning unit (5) along a helical path and the tape guides (19, 21, 101) guide the magnetic tape (2) towards and away from the scanning unit (5). One of the tape guides is constituted by a tape-guide pin (101) arranged at an angle (105) relative to the reel plane (3) and having a tape-edge guide (103) which extends around the tape-guide pin (101) along a helical path.

## Description

The invention relates to an apparatus suitable for cooperation with a magnetic tape on two reels situated on a reel plane, which apparatus comprises a scanning unit as well as tape guides and tape-transport means, which scanning unit has a tape-guide wall with a tape-guide ruler which extends around it along a helical path and over which a magnetic tape is guided during operation, which tape guides in operation guide a magnetic tape in a first tape-path section towards the scanning unit and in a second tape-path section away from the scanning unit, which tape guides in at least one of the tape-path sections comprise a height guide, a tape deflector and a tape-guide pin which is inclined relative to the reel plane.

An apparatus of the type defined in the opening paragraph is known from US 4,706,140. In operation this known apparatus cooperates with a magnetic-tape cassette with magnetic tape on two reels, one tape edge of the magnetic tape being situated in the plane of the reels. Since the magnetic tape is wrapped around the scanning unit along a helical path the tape edge leaves the reel plane and the inclined tape-guide pin subsequently guides the tape edge back into the reel plane. The tape deflector comprises a roller which changes the direction of the tape path in such a way that the tape edge remains in the reel plane. The height guide is formed by a projecting rim provided on the roller, which rim is in contact with a further tape edge of the magnetic tape. By means of this height guide the magnetic tape is subjected to a force which presses the magnetic tape onto the tape-guide ruler of the scanning unit. In order to achieve that during operation of the known apparatus the magnetic tape is guided away from and towards the scanning unit and is pressed onto the tape-guide ruler two elements have been arranged in both tape-path sections, *i.e.* a roller with a height guide and an inclined tape-guide pin.

It is an object of the invention to provide an apparatus of the type defined in the opening paragraph which enables the number of elements required for guiding a magnetic tape away from and/or towards the scanning unit and pressing the magnetic tape onto the tape-guide ruler to be reduced. To this end the apparatus in accordance with the invention is characterised in that the height guide, the tape deflector and the tape-guide pin are constituted by a tape-guide pin which is inclined relative to the reel plane and has a tape-edge guide, and in that the tape-edge guide extends around the tape-guide pin along a helical path. By providing a tape-edge guide which extends helically around a tape-guide pin only one element is needed to change the direction of the tape path, to guide the tape edge out of the reel plane and to subject the magnetic tape to a force which presses the magnetic tape onto the tape-guide ruler. Moreover, this tape-guide pin provides a better tape guidance than achieved with a pin and a roller.

It is to be noted that DE 40 11 617 A1 describes an apparatus employing a single element to change the direction of the tape path, to guide the tape edge out of the reel plane and to subject the magnetic tape to a force which presses the magnetic tape onto the tape-guide ruler, but this element is constituted by a pin which extends perpendicularly to the reel plane and has a height guide which does not extend helically around the pin. Guiding the tape edge out of the reel plane by means of this element results in the magnetic tape between this element and the scanning unit being loaded very unfavourably, which may give rise to damaging of the magnetic tape and the magnetic tape being wrapped incorrectly around the element and the scanning unit.

The invention will now be described in more detail, by way of example, with reference to the drawings. In the drawings:
Fig. 1 shows a deck of a prior-art apparatus;
Fig. 2 shows a deck of an apparatus in accordance with the invention;
Fig. 3 shows the deck of Fig. 2 with an open magnetic-tape cassette;
Fig. 4 illustrates the situation shown in Fig. 3 with the magnetic tape in an operational position, and
Fig. 5 shows a deck of a further embodiment of the apparatus in accordance with the invention.

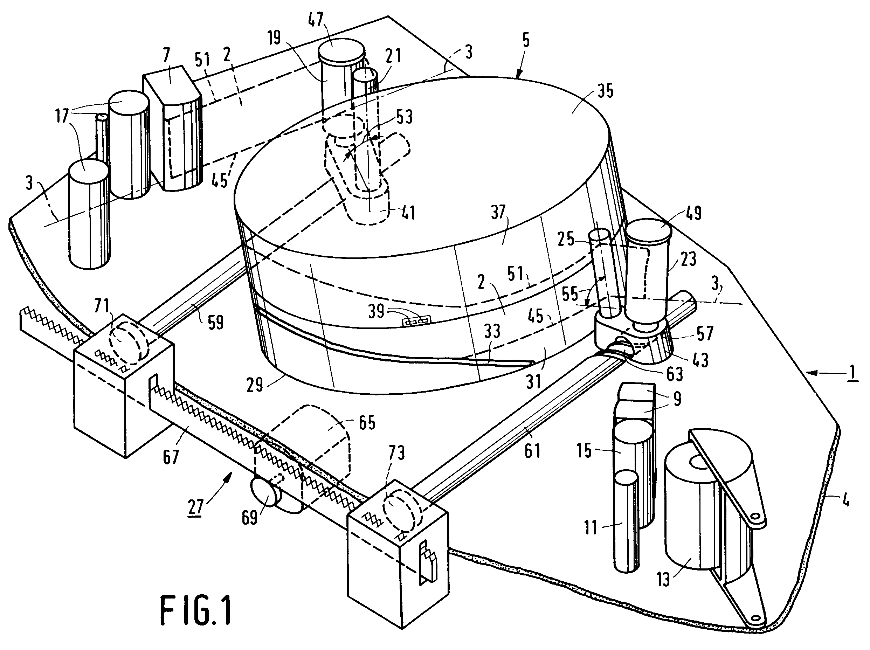

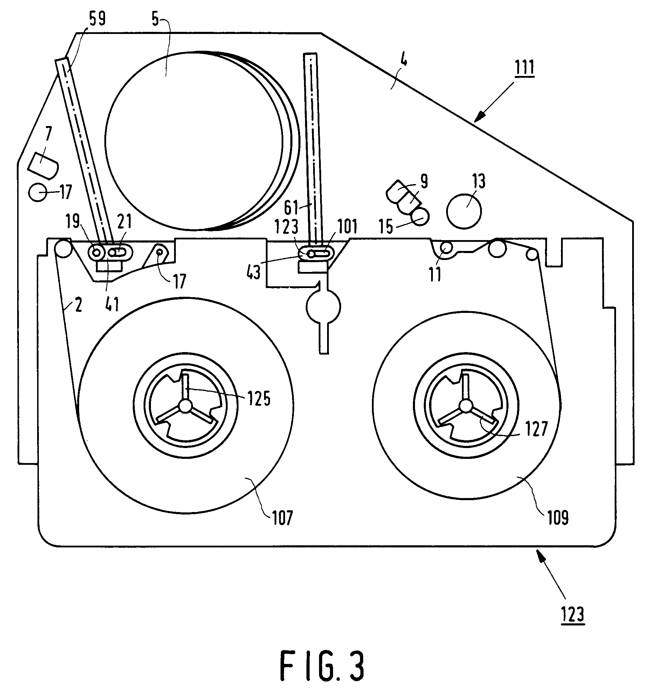

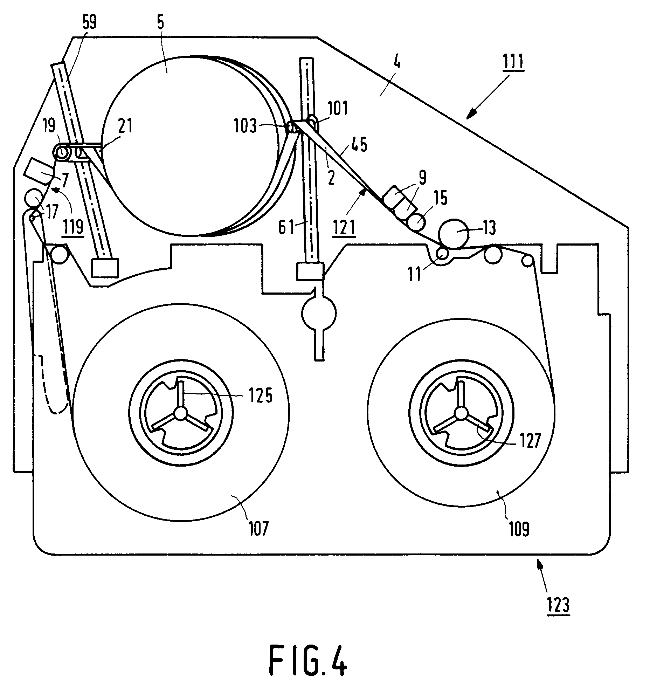

Fig. 1 shows a deck 1 of a prior-art apparatus suitable for cooperation with a magnetic tape 2 on two reels 107, 109 (see Fig. 3) situated on a reel plane 3. The deck 1 comprises a deck plate 4 carrying a scanning unit 5, stationary magnetic heads 7, 9, tape-transport means 11, 13, tape guides 15, 17, 19, 21, 23, 25 and an actuating mechanism 27 for moving the tape guides 19, 21, 23 and 25. The scanning unit 5 has a stationary lower drum 29 having a tape-guide wall 31 on which a helical tape-guide ruler 33 extends, and a rotatable upper drum 35 which also has a tape-guide wall 37 and carries magnetic heads 39 for reading and writing information in inclined tracks on the magnetic tape. The stationary magnetic head 7 is an erase head for erasing information on the magnetic tape and the stationary magnetic heads 9 serve for reading and writing auxiliary information on the magnetic tape. The tape-transport means comprise a capstan 11 for the transport of the magnetic tape and a pressure roller 13 for pressing the magnetic tape against the capstan. The tape guides 19, 21, 23 and 25 are arranged on two movable slides 41 and 43. The tape guides 19 and 23 are tape deflectors which change the direction of the path of the magnetic tape 2 in such a manner that an edge 45 of the magnetic tape 2 remains on the reel plane. The tape deflectors comprise rollers 19 and 23 which extend perpendicularly to the reel plane 3 and which have height guides 47, 49. The height guides are in contact with a further edge 51 of the magnetic tape 2 and in operation they subject the magnetic tape to a force which causes the magnetic tape to be pressed onto the tape-guide ruler 33 with the tape edge 45. The height guides comprise circular discs secured to the rollers. The tape guides 21 and 25 are constituted by tape-guide pins which are inclined at angles 53 and 55 relative to the reel plane 3, so that the edge 45 of the magnetic tape leaves the reel plane 3 and the magnetic tape 2 is guided away from and towards the scanning unit 5, which is also inclined relative to the reel plane 3. The tape deflector 19, the height guide 47 and the tape-guide pin 21 are situated in a first tape-path section 119 between the reel 107 and the scanning unit 5 (see also Fig. 4). The tape deflector 23, the height guide 49 and the tape-guide pin 25 are situated in a second tape-path section 121 between the reel 109 and the scanning unit 5 (see also Fig. 4). The slides 41 and 43 each have a bore with internal screwthread 57 and are slidable over the deck plate 4. The actuating mechanism 27 comprises two rods 59, 61 with screwthread 63, shown only partly, and engaging with the internal screwthread 57 of the slides 41 and 43. The actuating mechanism 27 further comprises an electric motor 65 and a gear rack 67, which is movable by the electric motor *via* a drive wheel 69. The rods 59 and 61 carry gear wheels 71 and 73 which mesh with the gear rack 67.

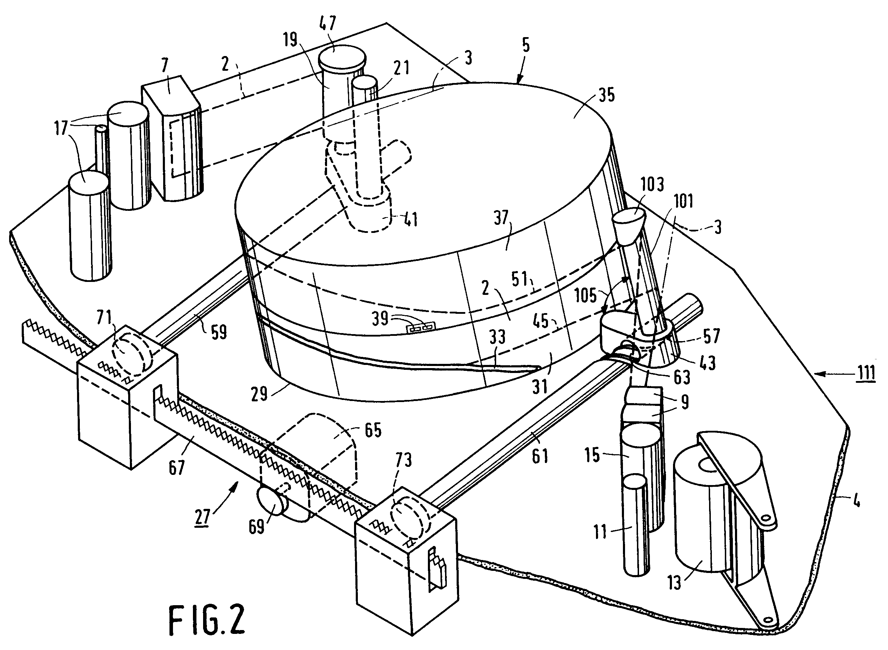

In order to reduce the number of elements required for guiding the magnetic tape and to improve the guidance the tape deflector 23 with the height guide 49 and the tape-guide pin 25 have been replaced by a tape-guide pin 101 with a tape-edge guide 103. Fig. 2 shows a deck 111 of an embodiment of the apparatus in accordance with the invention. In the apparatus in accordance with the invention (Fig. 2) elements corresponding to elements of the prior-art apparatus (Fig. 1) bear the same reference numerals as the corresponding elements of the prior-art apparatus. The tape-guide pin 101 is inclined at an angle 105 relative to the reel plane 3, so that the magnetic tape 2 follows a helical path around the tape-guide pin 101. The edge 45 of the magnetic tape 2 between the reel 107 (see Fig. 4) and the tape-guide pin 21 and between the reel 109 and the tape-guide pin 101 extends in the reel plane 3. The tape-edge guide 103 on the tape-guide pin 101 serves to press the magnetic tape 2 onto the tape-guide ruler 33 of the scanning unit 5. Since the magnetic tape 2 follows a helical path around the tape-guide pin 101 the tape-edge guide 103 should also extend along a helical path around the tape-guide pin 101 to be in contact with the further edge 51 of the magnetic tape 2 over a length. This tape-guide pin 101 causes the magnetic tape 2 between the pin 101 and the stationary magnetic heads 9 to be twisted, but this does not have any significant adverse consequences because the path along which the magnetic tape is twisted is long and the twisting angle is small.

Fig. 3 shows the deck 111 with an open magnetic-tape cassette 123 in a situation in which the cassette is in its operational position on two reel-drive spindles 125, 127 and the magnetic tape 2 is still inside the cassette 123. The slides 41 and 43 with the tape deflector 19, the tape-guide pin 21 and the tape-guide pin 101 are situated in recesses in the cassette behind the magnetic tape 2.

Fig. 4 shows the deck 111 with the open magnetic-tape cassette 123 in an operational situation in which the magnetic tape 2 has been withdrawn from the magnetic-tape cassette 123 by the tape deflector 19, the tape-guide pin 21 and the tape-guide pin 101 and has been wrapped around the scanning unit 5 along a helical path. The slides 41 and 43 have been moved along the rods 59 and 61 by the actuating mechanism 27. The magnetic tape 2 between the magnetic heads 9 and the tape-guide pin 101 is twisted in such a way that the edge 45 remains in the reel plane 3 (see Fig. 2).

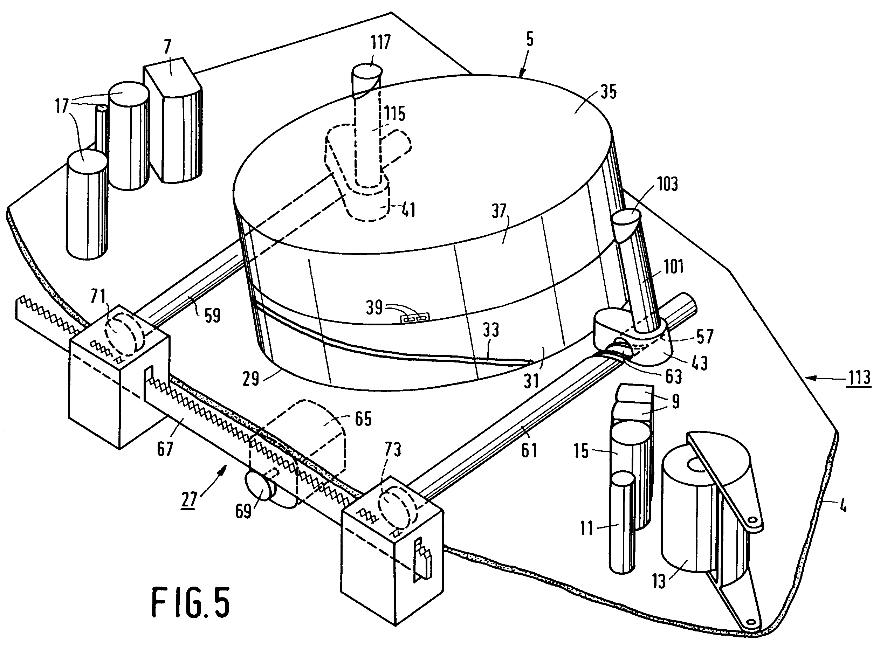

Fig. 5 shows a deck 113 of a further embodiment of the apparatus in accordance with the invention. In comparison with the prior-art deck 1 (see Fig. 1) the tape deflector 19, 23, the height guide 47, 49 and the tape-guide pin 21, 25 in both the first and the second tape-path section 119, 121 (see Fig. 4) have been replaced by a tape-guide pin 115, 101 having a tape-edge guide 117, 103 extending along a helical path around this pin.

Although the invention has been described with reference to the drawings this does not imply that the invention is limited to the embodiments shown in the drawings. The invention likewise relates to all embodiments which deviate from those shown in the drawings within the scope defined by the claims and which utilise the basic idea of the invention. For example, in deviation from what is shown in the drawings, such a tape-guide pin can also be used in conjunction with other tape wrapping methods such as, for example, a C-wrap instead of the M-wrap shown herein.

## Claims

1. An apparatus suitable for cooperation with a magnetic tape on two reels situated on a reel plane, which apparatus comprises a scanning unit as well as tape guides and tape-transport means, which scanning unit has a tape-guide wall with a tape-guide ruler which extends around it along a helical path and over which a magnetic tape is guided during operation, which tape guides in operation guide a magnetic tape in a first tape-path section towards the scanning unit and in a second tape-path section away from the scanning unit, which tape guides in at least one of the tape-path sections comprise a height guide, a tape deflector and a tape-guide pin which is inclined relative to the reel plane, characterised in that the height guide, the tape deflector and the tape-guide pin are constituted by a tape-guide pin which is inclined relative to the reel plane and has a tape-edge guide, and in that the tape-edge guide extends around the tape-guide pin along a helical path.
